# FASCICULE DE BREVET EUROPEEN

(11) **EP 1 606 868 B1**
(45) Date de publication et mention de la délivrance du brevet: **21.01.2009**
(21) Numéro de dépôt: 04715929.8
(22) Date de dépôt: 01.03.2004
(51) Int. Cl.: H02G 5/00

(54) **SYSTEME DE RACCORDEMENT ELECTRIQUE ET DE FIXATION D'AU MOINS UN CONDUCTEUR SUR UNE PIECE DE SUPPORT**
ELEKTRISCHES VERBINDUNGSSYSTEM FÜR MINDESTENS EINER LEITER AUF EINEM STÜTZELEMENT
SYSTEM FOR ELECTRICALLY CONNECTING AND FIXING AT LEAST ONE CONDUCTOR TO A SUPPORT PIECE

(30) Priorité: 13.03.2003 FR 0303131
(43) Date de publication de la demande: 21.12.2005
(73) Titulaire: IDEALEC, 25300 Pontarlier (FR)
(72) Inventeur: BISSON, Didier, F-25300 Doubs (FR); CAMACHO, Gabriel, F-57310 Guenange (FR); KRATTINGER, Hervé, F-25300 Pontarlier (FR); MARMIER, Régis, F-25560 Frasne (FR)
(74) Mandataire: Palix, Stéphane
(86) Numéro de dépôt international: PCT/FR2004/000473
(87) Numéro de publication internationale: WO 2004/084350

(56) Documents cités:
- DE-U- 29 715 523
- FR-A- 1 194 397
- FR-A- 2 784 241
- US-A- 3 966 296
- US-A- 4 802 863
- US-A- 5 616 052

## Description

La présente invention concerne un système de raccordement électrique et de fixation d'au moins un conducteur électrique en forme de plaque sur une pièce de support.

Plus particulièrement, l'invention se rapporte à de tels systèmes dans lesquels la pièce de support est munie d'un goujon adapté pour s'engager dans un trou correspondant du conducteur et pour coopérer avec un écrou de serrage du conducteur sur la pièce de support.

De tels systèmes de raccordement sont couramment utilisés par exemple dans des systèmes de plaques ou de barres de bus pour assurer le raccordement de conducteurs électriques.

Un exemple d'un tel système est décrit dans le document FR-A-2 784 241.

On sait également que de façon générale, ces systèmes de raccordement présentent un certain nombre d'inconvénients, notamment lors de la mise en place et du serrage du conducteur contre la pièce de support, dans des endroits difficiles d'accès.

En effet, ces systèmes de raccordement sont généralement placés dans des fonds d'armoires ou de paniers d'alimentation électrique et sont difficiles d'accès aux opérateurs de montage.

Il peut alors arriver que cet opérateur laisse échapper l'une ou l'autre des pièces entrant dans la constitution de ces systèmes et que celle-ci soit difficile voire impossible à récupérer.

On conçoit alors que ceci est gênant, voire dangereux, notamment pour l'intégrité électrique du reste de l'armoire ou du panier.

Le but de l'invention est donc de résoudre ces problèmes.

A cet effet, l'invention a pour objet un système de raccordement électrique et de fixation d'au moins un conducteur électrique en forme de plaque sur une pièce de support munie d'un goujon adapté pour s'engager dans un trou correspondant du conducteur et pour coopérer avec un écrou de serrage du conducteur sur la pièce de support, caractérisé en ce qu'une entretoise annulaire en matériau conducteur de l'électricité est associée au conducteur sur le côté de ce conducteur dirigé vers la pièce de support, en ce qu'une bague est disposée sur le côté opposé de ce conducteur et comporte des moyens d'accrochage flottant sur l'entretoise adaptés pour s'étendre à travers le trou correspondant de ce conducteur et en ce que l'écrou est associé à la bague par des moyens d'accrochage autorisant la rotation de l'écrou par rapport à la bague et une course déterminée de déplacement axial de l'écrou par rapport à cette bague, entre une position de montage éloignée de cette bague et une position de serrage en appui contre cette bague, pour faciliter la mise en place puis le serrage du conducteur contre la pièce de support

Selon d'autres caractéristiques :
- le trou du conducteur présente une forme générale oblongue pour faciliter son centrage sur le goujon ;
- les moyens d'accrochage de la bague sur l'entretoise comprennent des pattes en forme de crochets adaptées pour s'engager dans le trou correspondant du conducteur et pour coopérer avec des moyens de butée complémentaires de cette entretoise ;
- les moyens d'accrochage de l'écrou sur la bague comprennent des pattes en forme de crochets adaptées pour coopérer avec des moyens de butée complémentaires de cette bague ;
- les moyens d'accrochage de l'écrou sur la bague se présentent sous la forme d'un manchon tubulaire de l'écrou muni de moyens de butée adaptés pour coopérer avec des moyens de butée complémentaires de la bague ;
- les moyens de butée complémentaires comprennent au moins un rebord correspondant ;
- la pièce de support comporte au niveau du goujon, une pièce de renfort ;
- la pièce de support est formée par un autre conducteur ;
- la pièce de support est formée par un composant électrique ; et
- la pièce de support est formée par une plaque de raccordement électrique.

L'invention sera mieux comprise à la lecture de la description qui va suivre, donnée uniquement à titre d'exemple et faite en se référant aux dessins annexés, sur lesquels:
- la Fig.1 représente une vue en perspective d'un système de raccordement électrique selon l'invention en position de montage ;
- la Fig.2 représente une vue en coupe d'un tel système ;
- la Fig.3 représente une vue en perspective d'un tel système en position de serrage ;
- les Figs.4, 5 et 6 représentent des vues en perspective respectivement d'une bague, d'un écrou et d'une entretoise annulaire, entrant dans la constitution d'un tel système ; et
- la Fig.7 représente une vue en coupe d'un exemple d'application d'un tel système de raccordement.

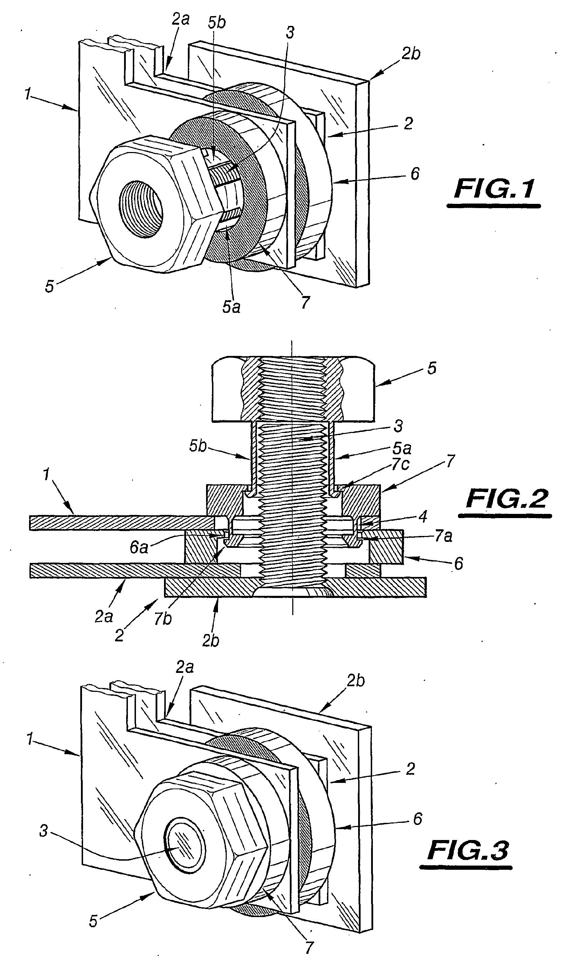

On a en effet représenté sur les figures 1 à 6, un système de raccordement électrique et de fixation d'au moins un conducteur électrique en forme de plaque, désigné par la référence générale 1, sur une pièce de support désignée par la référence générale 2.

Cette pièce de support 2 comporte un goujon désigné par la référence générale 3, adapté pour s'engager dans un trou correspondant 4 du conducteur 1 et pour coopérer avec un écrou de serrage 5 du conducteur sur la pièce de support 2.

En fait, différentes variantes de réalisation de la pièce de support peuvent être envisagées.

Ainsi, cette pièce de support 2 peut être formée par un autre conducteur, un composant électrique, une plaque ou barre de raccordement électrique, etc..

Dans l'exemple illustré sur ces figures, la pièce de support 2 est formée par un autre conducteur, désigné par la référence générale 2a sur ces figures, muni au niveau du goujon 3, d'une pièce de renfort désignée par la référence générale 2b.

Bien entendu, d'autres modes de réalisation peuvent être envisagés.

On conçoit alors que grâce à une telle structure, le goujon 3 est solidement fixé sur la pièce de support 2.

Le système de raccordement selon l'invention comporte une entretoise annulaire en matériau conducteur de l'électricité, et qui est désignée par la référence générale 6 sur ces figures.

Cette entretoise annulaire en matériau conducteur de l'électricité 6 est associée au conducteur 1, sur le côté de ce conducteur dirigé vers la pièce de support 2.

Une bague désignée par la référence générale 7 sur ces figures, est disposée sur le côté opposé de ce conducteur et comporte des moyens d'accrochage flottant sur l'entretoise, qui sont adaptés pour s'étendre à travers le trou correspondant 4 de ce conducteur.

Bien entendu, différents modes de réalisation de ces moyens d'accrochage flottant peuvent être envisagés.

Ainsi, par exemple, ces moyens d'accrochage peuvent se présenter sous la forme de pattes en forme de crochets, comme par exemple celles désignées par les références 7a et 7b sur ces figures, ces pattes en forme de crochets étant adaptées pour s'engager dans le trou correspondant 4 du conducteur et pour coopérer avec des moyens de butée complémentaires de l'entretoise 6, formés par exemple par un rebord correspondant de cette entretoise, désigné par la référence générale 6a sur ces figures.

On conçoit alors que l'engagement de ces pattes en forme de crochets, dans les moyens de butée complémentaires de l'entretoise, permet d'assurer un accrochage flottant de la bague 7 sur cette entretoise 6 et donc sur le conducteur 1.

Bien entendu, d'autres modes de réalisation peuvent être envisagés comme par exemple un manchon tubulaire de la bague muni de moyens de butée adaptés pour coopérer avec le rebord 6a de l'entretoise.

De plus, l'écrou 5 est associé à la bague 7 par des moyens d'accrochage autorisant la rotation de cet écrou par rapport à cette bague et une course déterminée de déplacement axial de l'écrou par rapport à cette bague, entre une position de montage éloignée de cette bague telle qu'illustrée sur les figures 1 et 2 et une position de serrage en appui contre cette bague, illustrée sur la figure 3.

Ces moyens d'accrochage de l'écrou sur la bague peuvent également présenter différentes formes.

Ainsi, par exemple, ces moyens d'accrochage de l'écrou sur la bague peuvent également comporter des pattes en forme de crochets, comme par exemple les pattes 5a et 5b illustrées sur ces figures, adaptées pour coopérer avec des moyens de butée complémentaires de la bague 7, formés par exemple par un rebord 7c de celle-ci.

Bien entendu, d'autres modes de réalisation encore peuvent être envisagés et ces moyens d'accrochage de l'écrou sur la bague peuvent également se présenter sous la forme d'un manchon tubulaire de l'écrou dont l'extrémité libre est munie de moyens de butée adaptés pour coopérer avec des moyens de butée complémentaires de la bague.

Dans ce cas, l'extrémité du manchon de l'écrou comprend également au moins une partie en saillie et les moyens de butée complémentaires de l'entretoise comprennent au moins un rebord correspondant pour assurer cet accrochage de l'écrou sur la bague.

On conçoit alors que l'écrou étant accroché sur la bague, il est également rendu solidaire du conducteur.

Ceci permet alors de former un système de montage à écrou, bague et entretoise imperdables, accroché sur le conducteur, qu'il convient de fixer sur la pièce de support.

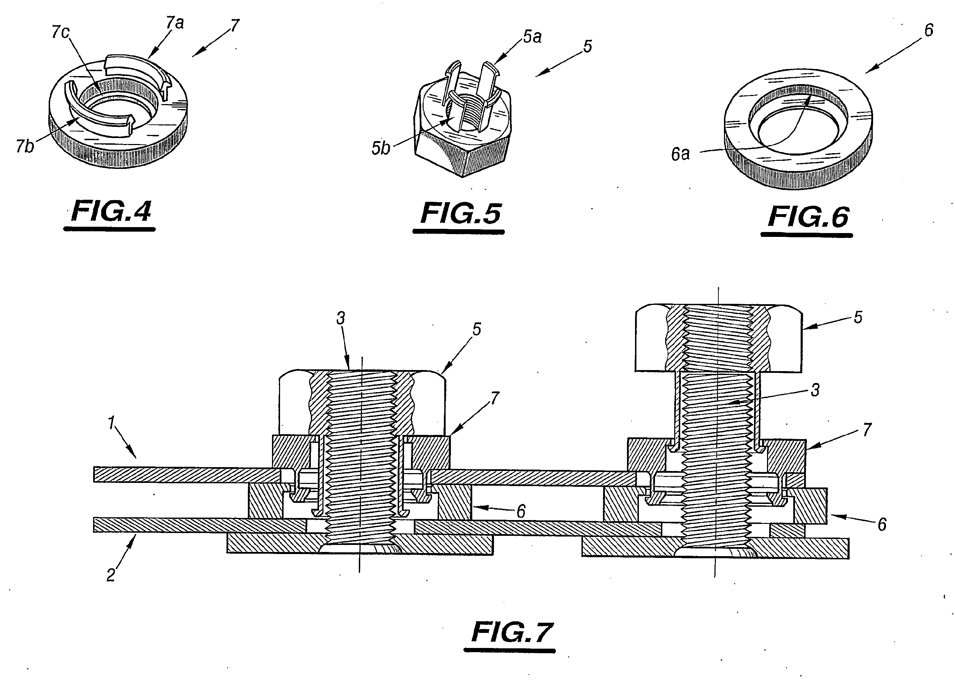

On notera également que le trou du conducteur peut présenter une forme générale oblongue, comme cela est illustré en particulier sur les figures 1 et 7, facilitant son centrage sur le goujon.

En effet, la bague, l'entretoise et donc l'écrou, sont montés de manière flottante sur le conducteur en position de montage, ce qui permet à ce sous-ensemble de se déplacer légèrement par rapport au conducteur dans le trou de forme oblongue de celui-ci, pour permettre un rattrapage d'un éventuel défaut d'alignement entre le goujon de la pièce de support et ce sous-ensemble.

De plus, la course déterminée de déplacement axial de l'écrou 5 par rapport à la bague 7 entre la position de montage éloignée de cette bague et la position de serrage en appui contre celle-ci, permet de monter plus simplement un conducteur à plusieurs systèmes de raccordement de ce type, sur une pièce de support, comme cela est illustré sur la figure 7.

En effet, si un conducteur 1 comporte plusieurs systèmes de raccordement tels que décrits précédemment, permettant de l'accrocher sur plusieurs goujons 3 d'une pièce de support 2, cette course déterminée de déplacement axial de l'écrou 5 par rapport à la bague 7, permet dans un premier temps, de mettre en place le conducteur 1 contre la pièce de support 2, sans être gêné par la présence des écrous 5, dans la mesure où ceux-ci se placent dans leur position de montage éloignée de la bague en étant repoussés par les goujons, puis dans un second temps, de serrer ceux-ci les uns à la suite des autres.

Sur cette figure 7, le système de droite est représenté en position de montage, l'écrou 5 étant repoussé en position de montage par le goujon 3, tandis que le système de gauche est représenté en position de serrage de la bague, du conducteur et de l'entretoise contre la pièce de support 2.

L'opérateur peut alors serrer les écrous indépendamment les uns des autres, sans risque de déplacement ou de déformation du conducteur.

Bien entendu, d'autres modes de réalisation encore peuvent être envisagés.

## Revendications

1. Système de raccordement électrique et de fixation d'au moins un conducteur électrique (1) en forme de plaque sur une pièce de support (2) munie d'un goujon (3) adapté pour s'engager dans un trou correspondant (4) du conducteur (1) et pour coopérer avec un écrou de serrage (5) du conducteur sur la pièce de support, **caractérisé en ce qu'**une entretoise annulaire (6) en matériau conducteur de l'électricité est associée au conducteur (1) sur le côté de ce conducteur dirigé vers la pièce de support (2), **en ce qu'**une bague (7) est disposée sur le côté opposé de ce conducteur (1) et comporte des moyens d'accrochage flottant (7a,7b) sur l'entretoise (6) adaptés pour s'étendre à travers le trou correspondant (4) de ce conducteur et **en ce que** l'écrou (5) est associé à la bague (7) par des moyens d'accrochage (5a,5b) autorisant la rotation de l'écrou par rapport à la bague et une course déterminée de déplacement axial de l'écrou (5) par rapport à cette bague (7), entre une position de montage éloignée de cette bague (Figs.1,2) et une position de serrage (Fig.3) en appui contre cette bague (7), pour faciliter la mise en place puis le serrage du conducteur (4) contre la pièce de support (2).

2. Système selon la revendication 1, **caractérisé en ce que** le trou du conducteur (4) présente une forme générale oblongue pour faciliter son centrage sur le goujon (3).

3. Système selon l'une quelconque des revendications précédentes, **caractérisé en ce que** les moyens d'accrochage de la bague (7) sur l'entretoise (6) comprennent des pattes en forme de crochets (7a,7b) adaptées pour s'engager dans le trou correspondant (4) du conducteur et pour coopérer avec des moyens de butée complémentaires (6a) de cette entretoise (6).

4. Système selon l'une quelconque des revendications précédentes, **caractérisé en ce que** les moyens d'accrochage de l'écrou (5) sur la bague (7) comprennent des pattes en forme de crochets (5a,5b) adaptées pour coopérer avec des moyens de butée complémentaires (7c) de cette bague (7).

5. Système selon l'une quelconque des revendications 1 à 3, **caractérisé en ce que** les moyens d'accrochage de l'écrou (5) sur la bague (7) se présentent sous la forme d'un manchon tubulaire de l'écrou muni de moyens de butée adaptés pour coopérer avec des moyens de butée complémentaires (7c) de la bague (7).

6. Système selon la revendication 3,4 ou 5, **caractérisé en ce que** les moyens de butée complémentaires comprennent au moins un rebord correspondant.

7. Système selon l'une quelconque des revendications précédentes, **caractérisé en ce que** la pièce de support (2) comporte au niveau du goujon (3), une pièce de renfort (2b).

8. Système selon l'une quelconque des revendications précédentes, **caractérisé en ce que** la pièce de support (2) est formée par un autre conducteur.

9. Système selon l'une quelconque des revendications 1 à 7, **caractérisé en ce que** la pièce de support (2) est formée par un composant électrique.

10. Système selon l'une quelconque des revendications 1 à 7, **caractérisé en ce que** la pièce de support (2) est formée par une plaque de raccordement électrique.

## Claims

1. A system for electrically coupling and fastening at least one electrical conductor (1) in the form of a plate onto a support piece (2) provided with a threaded pin (3) designed to be engaged in a corresponding hole (4) of conductor (1) and to cooperate with a nut for screwing (5) the conductor onto the support piece, **characterized in that** an annular spacer (6) of electrically conductive material is joined to conductor (1), on the side of this conductor that faces support piece (2), and **in that** a ring (7) is positioned on the opposite side of this conductor (1) and comprises floating means (7a, 7b) for coupling onto spacer (6) designed to extend through corresponding hole (4) of this conductor and **in that** nut (5) is joined to ring (7) by coupling means (5a, 5b) allowing rotation of the nut (5) relative to the ring (7) and a determined course of axial movement of nut relative to this ring (Figs.1, 2), between a position of assembling distant from this ring and a position for screwing (Fig.3) in which the nut is supported against this ring (7), in order to facilitate the positioning and then the screwing of conductor (4) against support piece (2).

2. The system according to claim 1, further **characterized in that** hole of the conductor (4) has a generally oblong shape in order to facilitate centering it on the threaded pin (3).

3. The system according to claim 1, further **characterized in that** the means for coupling ring (7) onto spacer (6) comprise hook-type tabs (7a, 7b) designed to engage in corresponding hole (4) of the conductor and to cooperate with complementary stop (6a) means of this spacer (6).

4. The system according to claim 1, further **characterized in that** the means for fastening nut (5) onto ring (7) comprise hook-type tabs (5a, 5b) designed to cooperate with complementary stop (7c) means of this ring (7).

5. The system according to claim 1 to 3, further **characterized in that** the means for coupling nut (5) onto ring (7) have the form of a tubular sleeve of the nut provided with stop means designed to cooperate with complementary stop (7c) means of ring (7).

6. The system according to claim 3, 4 or 5, further **characterized in that** the complementary stop means comprise at least one corresponding rim.

7. The system according to any claim preceding, further **characterized in that** support piece (2) has a reinforcement piece (2b)at the level of threaded pin (3).

8. The system according to any claim preceding, further **characterized in that** support piece (2) is formed by another conductor.

9. The system according to claim 1 to 7, further **characterized in that** support piece (2) is formed by an electrical component

10. The system according to claim 1 to 7, further **characterized in that** support piece (2) is formed by an electrical connection plate.

## Patentansprüche

1. System zum elektrischen Anschluss und zur Befestigung mindestens eines elektrischen Leiters (1) in Form einer Platte an einem Tragteil (2), das mit einem Bolzen (3) versehen ist, der dafür ausgelegt ist, in ein entsprechendes Loch (4) des Leiters (1) einzutreten und mit einer Mutter (5) zum Festklemmen des Leiters an dem Tragteil zusammenzuwirken, **dadurch gekennzeichnet, dass** dem Leiter (1) auf der dem Tragteil (2) zugewandten Seite dieses Leiters ein ringförmiges Zwischenstück (6) aus elektrisch leitendem Werkstoff zugeordnet ist, dass auf der entgegengesetzten Seite des Leiters (1) ein Ring (7) angeordnet ist, der Mittel (7a, 7b) zum schwimmenden Einhaken an dem Zwischenstück (6) umfasst, die dafür ausgelegt sind, sich durch das entsprechende Loch (4) des Leiters zu erstrecken, und dass die Mutter (5) mit dem Ring (7) durch Einhakmittel (5a, 5b) verbunden ist, die die Drehung der Mutter bezüglich des Rings und eine bestimmte axiale Bewegung der Mutter (5) bezüglich des Rings (7) zwischen einer von dem Ring entfernten Montagestellung (Fig. 1, 2) und einer Klemmstellung (Fig.3) in Anlage an dem Ring (7) zulassen, um das Aufsetzen und dann das Festklemmen des Leiters (4) auf dem Tragteil (2) zu erleichtern.

2. System nach Anspruch 1, **dadurch gekennzeichnet, dass** das Loch des Leiters (4) eine längliche allgemeine Form aufweist, um seine Zentrierung auf dem Bolzen (3) zu erleichtern.

3. System nach einem der vorhergehenden Ansprüche, **dadurch gekennzeichnet, dass** die Mittel zum Einhaken des Rings (7) an dem Zwischenstück (6) hakenförmige Lappen (7a, 7b) umfassen, die dafür ausgelegt sind, in das entsprechende Loch (4) des Leiters einzutreten und mit ergänzenden Anschlagsmitteln (6a) des Zwischenstücks (6) zusammenzuwirken.

4. System nach einem der vorhergehenden Ansprüche, **dadurch gekennzeichnet, dass** die Mittel zum Einhaken der Mutter (5) an dem Ring (7) hakenförmige Lappen (5a, 5b) umfassen, die dafür ausgelegt sind, mit ergänzenden Anschlagsmitteln (7c) des Rings (7) zusammenzuwirken.

5. System nach einem der Ansprüche 1 bis 3, **dadurch gekennzeichnet, dass** die Mittel zum Einhaken der Mutter (5) an dem Ring (7) in der Form einer rohrförmigen Buchse der Mutter vorliegen, die mit Anschlagsmitteln versehen ist, die dafür ausgelegt sind, mit ergänzenden Anschlagsmitteln (7c) des Rings (7) zusammenzuwirken.

6. System nach Anspruch 3, 4 oder 5, **dadurch gekennzeichnet, dass** die ergänzenden Anschlagsmittel mindestens einen entsprechenden abgewinkelten Rand umfassen.

7. System nach einem der vorhergehenden Ansprüche, **dadurch gekennzeichnet, dass** das Tragteil (2) auf Höhe des Bolzens (3) ein Verstärkungsteil (2b) umfasst.

8. System nach einem der vorhergehenden Ansprüche, **dadurch gekennzeichnet, dass** das Tragteil (2) von einem anderen Leiter gebildet ist.

9. System nach einem der Ansprüche 1 bis 7, **dadurch gekennzeichnet, dass** das Tragteil von einem elektrischen Bauelement gebildet ist.

10. System nach einem der Ansprüche 1 bis 7, **dadurch gekennzeichnet, dass** das Tragteil (2) von einer elektrischen Anschlussplatte gebildet ist.
